Europäisches Patentamt

European Patent Office

Office européen des brevets

(19)

(11) Publication number: **0 400 988**
**A1**

(12) # EUROPEAN PATENT APPLICATION

(21) Application number: **90305878.2**

(22) Date of filing: **30.05.90**

(51) Int. Cl.⁵: **B61D 3/18, B60D 1/07, B60F 1/04**

(30) Priority: **30.05.89 GB 8912322**

(43) Date of publication of application:
**05.12.90 Bulletin 90/49**

(84) Designated Contracting States:
**AT BE CH DE DK ES FR GB GR IT LI LU NL SE**

(71) Applicant: **TRAILER TRAIN LIMITED**
**Alliance House 12 Caxton Street**
**London SW1H 0QS(GB)**

(72) Inventor: **Ellis, Bruce Richard**

Uplands Park
Sheringham, Norfolk, NR26 8NE(GB)
Inventor: **Thorpe, Roger William**
44 Cromarty Road
Stamford, Lincolnshire(GB)

(74) Representative: **Thiemann, Peter Albert**
**William et al**
**LLOYD WISE, TREGEAR & CO. Norman**
**House 105-109 Strand**
**London WC2R 0AE(GB)**

(54) **Coupling for transport system.**

(57) A coupling is described for coupling two items together and is particularly suitable for, although not limited to, coupling semi-trailers to bogies in the road and rail transport system described in EP-A 0143614.

One of the items to be coupled carries a coupling part in the form of a locating member and the other item carries a coupling part in the form of a receiving member (10) formed with an aperture (14) of closed peripheral outline in which the locating member can be received. The receiving member (10) is of stepped form having a lower step portion (11) and an upper step portion (12), the riser (13) between the two step portions forming an abutment and guide surface extending around substantially half the aperture (14), the internal wall of which slopes or curves inwardly. The coupling is made by moving the locating member over the lower step portion (11) in a first, e.g. horizontal, direction until it engages the riser (13) which guides the locating member until it is substantially in register with the aperture (14), whereupon movement in a second direction normal to the first, e.g. vertical, mates the locating member in the aperture (14). Means may be provided, if required, to lock the locating member and receiving member (10) to prevent relative rotation between them or separation in said second direction.

Fig.1.

EP 0 400 988 A1

This invention relates to a transport system and is particularly concerned with a trailer-to-bogie coupling for a road/rail transport system which comprises a plurality of semi-trailers for use in a road mode and a plurality of bogies for supporting the semi-trailer in a rail mode.

In the specification of European Patent Application No. 0 143 614 there is described and claimed a road and rail transport system, comprising a plurality of semi-trailers' each semi-trailer comprising a body member, road wheels fixed to said body member at or near the trailing end thereof for supporting the semi-trailer during use in a road mode, and connecting means at the leading end of the semi-trailer for connecting the semi-trailer to a tractor unit, a plurality of bogies each bogie comprising at least two axles, bogie wheels mounted on the axles, a frame supporting said axles, and coupling means for coupling a semi-trailer to a bogie, the arrangement being such that trains of bogies and semi-trailers can be readily assembled so that each bogie effectively supports the weight of one semi-trailer, the bogies always being used in a rail mode but the semi-trailers being demountable from the bogies and used independently in a road mode, characterised in that each bogie has a central bogie bolster arranged between the axles and transverse to the intended direction of travel, a pocket formed in the central bogie bolster of the bogie and a mounting member held in the pocket to permit limited movement of the mounting member relative to the pocket, there being a substantially planar covering surface to said mounting member to prevent ingress of dirt and moisture into said pocket from above, and there being on said covering surface of said mounting member an upstanding member formed with an aperture or groove and constituting a first part of a quick-release coupling means for connecting the trailing end of a semi-trailer to a bogie, and in that each semi-trailer has at each end a body bolster, the body bolster at the trailing end comprising a locking member for reception by said aperture or groove and constituting a second part of said quick-release coupling means for coupling a semi-trailer to a bogie, there being additional coupling means associated with each body bolster whereby a leading end of one semi-trailer can be releasably coupled to the trailing end of another semi-trailer, such that the load of a first semi-trailer is transmitted to the bogie of a second adjacent semi-trailer via the additional coupling means and the mounting of the second semi-trailer on the bogie.

The quick-release coupling between the semi-trailer and the bogie has to be capable of transferring horizontal shear forces and of preventing rotation between the semi-trailer and the mounting member, so that any rotation between the semi-trailer and the bogie occurs at a friction surface at the interface between the mounting member and the pocket. It must also be easy to engage the coupling when the semi-trailer is to be mounted on the bogie.

One embodiment of the quick-release coupling means described in the aforesaid European Patent Specification comprises an upstanding member in the form of a rectangular block on the substantially planar covering surface of the mounting member, the block being intended to engage in a U-shaped shoe having a splayed mouth and mounted below a body bolster at the rear end (relative to the intended direction of travel in the road mode) of a semi-trailer.

It has however been found in practice that the described quick-release coupling means is difficult to engage. When a semi-trailer and a bogie are to be engaged, it is necessary to align the semi-trailer to the bogie in a lateral and longitudinal sense. This alignment is critical and requires extraordinary skill on the part of an operative. Furthermore, the splayed mouth of the shoe which should serve to guide the rectangular block relative to the shoe is not very effective because the forces generated in trying to align the semi-trailer and the bogie laterally relative to one another are so large, because of the friction between the road and the road wheels, that effective guidance does not occur. Furthermore, because the block is rectangular in shape there is a larger area for taking up lateral shear forces than for taking up longitudinal shear forces, and finally, the mechanism for locking the block in the shoe is mounted on the semi-trailer, which adds cost and weight to the semi-trailer and reduces the load which it can carry.

It is an object of the present invention to provide a quick-release coupling suitable for use in a road/rail transport system of the kind indicated which overcomes or reduces the disadvantages of the above described coupling. Although the present coupling is described for use in the aforesaid transport system it is to be appreciated that it may be employed in other situations where a coupling is required between two parts and is required to be capable of taking shear forces and of preventing rotation between the parts when coupled.

According to one aspect of the present invention there is provided a coupling for coupling together two items capable of being moved in a first direction to bring two parts of the coupling into engagement and in a second direction normal to the first to complete the coupling, wherein the first item carries a coupling part in the form of a locating member and wherein the second item carries a coupling part in the form of a receiving member formed with an aperture of closed peripheral outline to receive and mate with the locating member, the receiving member being of stepped form having a lower step portion and an upper step portion, the riser between the two step portions forming an abutment and guide surface extending around substantially half said aperture and the internal wall of the aperture sloping or curving inwardly, the coupling being made by moving the locating member relative to the lower step portion of the receiving member in said first direction until it engages said riser which serves to guide the locating member until it is substantially in register with said aperture, whereupon movement in the second direction mates the locating member in the aperture to complete the coupling, means being provided, if required, to lock the locating member and receiving member to prevent relative rotation there between.

Preferably, the locating member is in the form of an annular frustocone and in this case means will be required to prevent relative rotation between the two members. However, if the locating member is of non-circular outline then no such means will be required, although locking means for preventing separation of the two members in the second direction may be required.

Although the present coupling has been outlined broadly above, a more specific and preferred form of the coupling is designed for coupling a semi-trailer to a bogie in a road/rail transport system which comprises a plurality of semi-trailers, each semi-trailer comprising a body member, road wheels fixed to said body member at or near the trailing end thereof for supporting the semi-trailer during use in a road mode, and connecting means at the leading end of the semi-trailer for connecting the semi-trailer to a tractor unit, a plurality of bogies each bogie comprising at least two axles, bogie wheels mounted on the axles, a frame supporting said axles, and coupling means for coupling a semi-trailer to a bogie, the arrangement being such that trains of bogies and semi-trailers can be readily assembled so that each bogie effectively supports the weight of one semi-trailer, the bogies always being used in a rail mode but the semi-trailers being demountable from the bogies and used independently in a road mode. In this system, each bogie has a central bogie bolster arranged between the axles and transverse to the intended direction of travel, a pocket formed in the central bogie bolster of the bogie and a mounting member held in the pocket to permit limited movement of the mounting member relative to the pocket, there being a substantially planar covering surface to said mounting member to prevent ingress of dirt and moisture into said pocket from above, and there being on said covering surface of said mounting member a first coupling part of a quick-release coupling for connecting the trailing end of a semi-trailer to a bogie, and each semi-trailer has at each end a body bolster, the body bolster at the trailing end comprising a second part of said quick-release coupling for coupling a semi-trailer to a bogie, there being additional coupling means associated with each body bolster whereby a leading end of one semi-trailer can be releasably coupled to the trailing end of another semi-trailer, such that the load of a first semi-trailer is transmitted to the bogie of a second adjacent semi-trailer via the additional coupling means and the mounting of the second semi-trailer on the bogie.

According to another aspect of the present invention, the quick-release coupling in such a road/rail transport system, comprises as said second coupling part a locating member mounted below the body bolster at the trailing end of the semi-trailer and as said first coupling part a receiving member on the covering surface of the mounting member, the receiving member being formed with an aperture of closed peripheral outline to receive and mate with the locating member, and the receiving member being of stepped form having a lower step portion and an upper step portion, the riser between the step portions forming an abutment and guide surface extending around substantially half said aperture for the purpose of guiding the locating member into register with the aperture when the coupling is being made by engaging the rear end of the semi-trailer with the bogie, there being means for locking the two coupling parts together.

In one form the locating member is in the form of an annular frustocone or a spherical sector and locking blocks are provided at diametrically opposite locations for engaging the riser and for receiving locking pins. The locking pins may be spring loaded into a locking position and connected to a handle by means of which an operator can lock or unlock the coupling.

In order to enable the invention to be more readily understood, reference will now be made to the accompanying drawings, which illustrate diagrammatically and by way of example an embodiment thereof, and in which:-

Figure 1 is a side view of a coupling between a semi-trailer and a bogie,

Figure 2 is a plan view along the line A-A in Figure 1 in the direction of the arrows of the part of the coupling on the bogie,

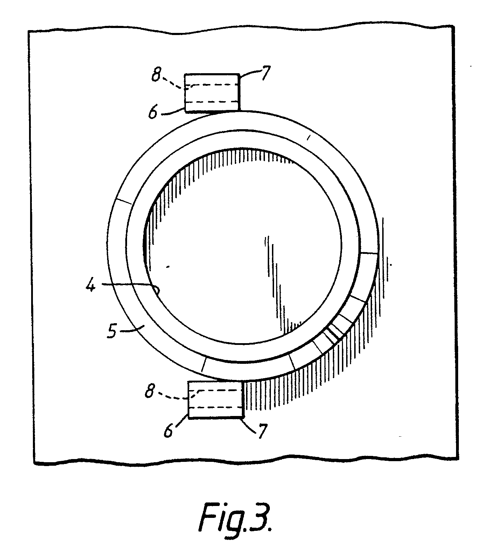

Figure 3 is a plan view along the line A-A in Figure 1 but in the opposite direction to the arrows of the part of the coupling on the semi-trailer,

Figure 4 is a partial end view in the direction of the arrow in IV in Figure 1, and

Figure 5 is a part section on the line V-V in Figure 4.

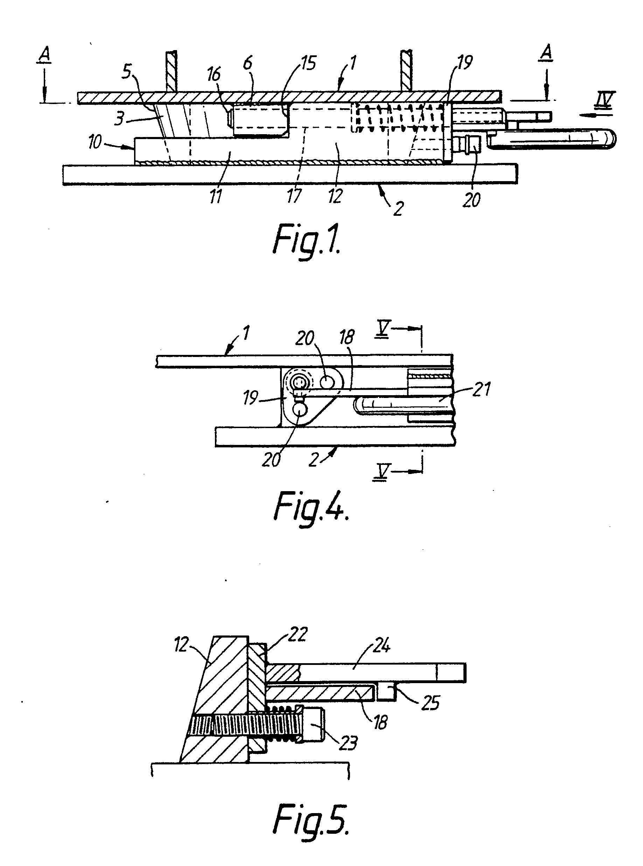

Referring now to the drawings, there is shown a quick-release coupling between a semi-trailer and a bogie. The base of rear body bolster of the semi-trailer is indicated at 1 in Figure 1 and the bogie has a mounting member held in a pocket in the bogie so as to permit limited movement of the mounting member relative to the pocket. The mounting member, details of which are not shown, has a substantially planar covering surface constituted by the upper surface of a plate 2.

The base 1 of the body bolster has welded to it a locating member in the form of a frustoconical annular ring 3 with an internal cylindrical surface 4 and an outer conical surface 5. Two locking blocks 6 are also welded to the base 1 of the body bolster and have stop surfaces 7 substantially lying on a diametral line of the ring 3. Each block 6 is formed with a through hole 8.

An upstanding receiving member 10 is welded to the upper surface of the plate 2 and has the form of a stepped block with a lower step portion 11 and an upper step portion 12 with a riser 13 between the step portions. The block has a central frustoconical aperture 14 a diameter of which lies at the transition between the step portions. The aperture is intended to receive and mate with the frustoconical annular ring 3 and end faces 15 of the upper step portion 12, which end faces form part of the riser 13, are intended, when the coupling is in the coupled position, to abut against the stop surfaces 7 of the locking blocks 6.

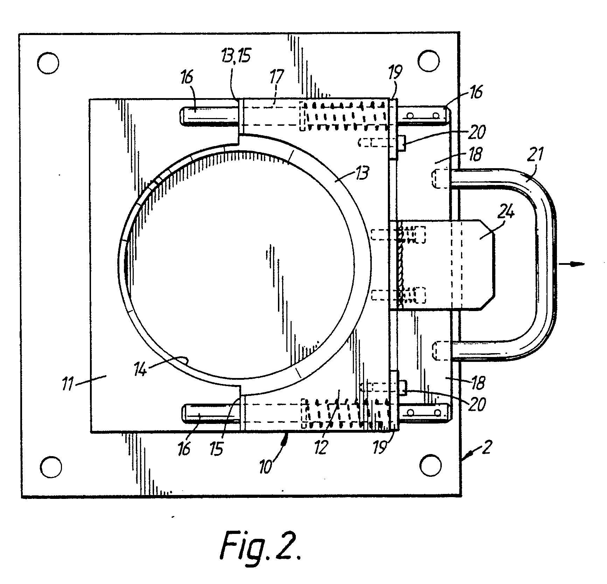

In the coupled position, the blocks 6 are held in position against the end faces 15 by spring-loaded pins 16 which pass through apertures 17 in the upper step portion 12 and engage in the through holes 8 in the blocks 6. At their other ends, the pins 16 are secured to a cross-beam 18 which extends across the end of the upper step portion 12 remote from the lower step portion 11, and which is spaced therefrom at each end by substantially triangular retention plates 19 which are secured to the end of the upper step portion by cap screws 20. A handle 21 is attached to the cross-beam and an operator, by pulling the handle 21 in the direction of the arrow in Figure 2, can move the cross-beam 18 and attached pins 16 in the same direction so as to release the pins from engagement in the locking blocks 6 to permit uncoupling, the pins 16 being moved against the action of the spring loading which urges them into the position shown in Figure 2.

A locking mechanism, is provided for holding the cross-beam 18 and thus the pins 16 either in the coupled position shown in Figure 1 or in an uncoupled position when the free ends of the pins are retracted into the apertures 17. The locking mechanism comprises a plate 22 which abuts the centre part of the end face of the upper step portion and is retained in position by spring loaded cap screws 23, the width of the plate 22 being the same as but no wider than that of the retention plates 19. A hand lever plate 24 is welded to plate 22 so as to lie normal to the plate and has an abutment bar 25 welded to its underside at a position such that the cross-beam 18 is accommodated between the plate 22 and bar 25 as shown in Figure 5. In this position, the bar 25 prevents the cross-beam 18 from being moved by the handle 21 and locks the pins 16 in the coupled position. In order to release the locking mechanism, the operator lifts the free end of the plate 24, so that the plate 22 pivots about its upper end with its lower end moving against the action of the spring loading of the pins 23. Lifting is continued until the bar 25 has cleared the cross-beam 18, whereupon the latter can be moved by pulling the handle 21. Pulling may be continued until the end of the cross-beam nearer the upper step portion has move beyond the bar 25, whereupon the plate 24 can be lowered so that said end of the cross-beam engages the other side of the bar 25 and the coupling is held in an uncoupled position with the pins 16 retracted into the apertures 17.

In order to effect coupling between a semi-trailer and a bogie in the transport system outlined in the aforesaid European Patent Specification, the semi-trailer is backed towards the bogie with the aim of mating the annular ring 3 into the aperture 14. The height of the semi-trailer at the rear is adjusted by means of the ride height control system of the road suspension of the semi-trailer so that the lower surface of the annular ring 3 just clears the top surface of the lower step portion 11 of the upstanding member 10 on the plate 2 of the bogie. The semi-trailer is then backed over the rail bogie until the rear end of the ring 3 makes contact with the riser 13 between the lower step portion 11 and the upper step portion 12. Considerable lateral misalignment between the semi-trailer and bogie can be accommodated at this stage, and the semi-trailer will most probably be misaligned transversely to the bogie, but the longitudinal misalignment will be within the "gather" of the ring 3 and the upper part of the upper step portion 12. The rear of the semi-trailer can then be lowered to impose some weight onto the misaligned interface between the ring 3 and the upstanding member 10, thereby ensuring that the two parts will engage when transverse alignment is achieved.

In order to ensure transverse alignment, the semi-trailer is backed further thereby pushing the rail bogie along at the same time, and the semi-trailer is manoeuvred with the aim of gaining lateral or transverse alignment while maintaining longitudinal alignment. When the two components become transversely aligned, there is partial engagement of the ring 3 in the aperture 14. At this point the road wheels of the semi-trailer are raised so as to transfer the full weight of the semi-trailer on to the bogie. The ring 3 will now be fully engaged in the aperture 14 and the coupling can be locked by raising the plate 24 and allowing the cross-beam 18 to return to the position shown in Figure 5 when the pins 16 will engage in the through holes 8 in the locking blocks 6 and prevent separation between the semi-trailer and the bogie plate 2. Abutment between the vertical stop surfaces 7 and the end surfaces 15 prevents rotation occurring between the ring 3 and the member 10 so that rotation will only occur at a friction interface of the mounting member of the bogie in the pocket of the latter.

It will be appreciated that the present coupling is easy to align and has the advantage that it is largely self-correcting for a wide range of initial misalignment. There is also a large contact area between the two parts of the coupling and it is capable of transmitting shear forces equally in all directions. Furthermore, the locking mechanism is simple and since it is carried by the bogie it does not decrease the pay load of the semi-trailer.

Although the coupling of the present invention has been described for use in coupling semi-trailers to bogies in a road/rail transport system it is to be appreciated that the coupling will be useful in other situations, especially where two members to be coupled are moved relative to one another in a substantially horizontal direction.

It will also be appreciated that many modifications of the coupling are possible and while the locating member has been described as having the form of a frustoconical annular ring, it could be a solid frustocone if considerations of weight are not important, or it could be in the form of a hemisphere or sector of a sphere. It could also be hollow or formed with drilled holes to reduce weight. Instead of being circular in outline, the locating member could be elliptical, or it could be triangular, square or polygonal but with well rounded corners but these shapes would only be preferred where there is little risk of misalignment during coupling or where other considerations decide the shape of the coupling parts. In each case, the aperture in the upstanding member would be shaped to register with the locating member.

Modifications of the locking mechanism are also possible and the described engagement of the vertical faces 7 and 15 could be dispensed with if the outlines of the locating member and aperture in the upstanding member were so far out of the circular as to render the member self-locking in the horizontal direction. However, means for locking the members in the vertical direction might still be required.

## Claims

1. A coupling for coupling together two items capable of being moved in a first direction to bring two parts of the coupling into engagement and in a second direction normal to the first to complete the coupling, the first item carrying a coupling part in the form of a locating member and the second item carrying a coupling part in the form of a receiving member to receive and mate with the locating member,
characterised in that the receiving member is formed with an aperture (14) of closed peripheral outline and is of stepped form having a lower step portion (11) and an upper step portion (12), the riser (13) between the two step portions forming an abutment and guide surface extending around substantially half said aperture and the internal wall of the aperture sloping or curving inwardly, the coupling being made by moving the locating member (3) relative to the lower step portion of the receiving member in said first direction until it engages said riser which serves to guide the locating member until it is substantially in register with said aperture, whereupon movement in the second direction mates the locating member in the aperture to complete the coupling, means being provided, if required, to lock the locating member and receiving member to prevent relative rotation there between.

2. A coupling for use in a road and rail transport system which comprises a plurality of semi-trailers and a plurality of bogies, the coupling serving to couple a semi-trailer to a bogie such that trains of bogies and semi-trailers can be assembled, so that each bogie effectively supports the weight of one semi-trailer, by moving a semi-trailer in a first direction relative to a bogie to bring two parts of the coupling into engagement and in a second direction normal to the first to complete the coupling, characterised in that each semi-trailer carries a coupling part in the form of a locating member (13) mounted below a body bolster (1) of the semi-trailer at the trailing end of the semi-trailer and each bogie carries a coupling part in the form of a receiving member (10) on the covering surface of a mounting member of the bogie, the receiving member being formed with an aperture (14) of closed peripheral outline to receive and mate with the locating member, and the receiving member being of stepped form having a lower step portion (1) and an upper step portion (12), the riser (13) between the step portions forming an abutment and guide surface extending around substantially half said aperture for the purpose of guiding the locating member into register with the aperture when the coupling is being made by engaging the rear end of the semi-trailer with the bogie, there being means for locking the two coupling parts together.

3. A coupling as claimed in Claim 1 or 2, wherein the locating member is of non-circular outline and the aperture in the receiving member is of complementary outline whereby relative rotation between the locating member and the receiving member is prevented when the coupling is made.

4. A coupling as claimed in Claim 1 or 2, wherein the locating member is in the form of an annular frustocone and means are provided to prevent relative rotation between the locating member and the receiving member.

5. A coupling as claimed in Claim 4, wherein one or more locking blocks is or are provided adjacent or associated with the locating member for engagement against stop surfaces on the receiving member to prevent relative rotation between the locating member and the receiving member.

6. A coupling as claimed in Claim 5, wherein the means for locking the two coupling parts together comprises one or more locking pins mounted in the receiving member, the, or each pin being engageable in an aperture in a respective locking block.

7. A coupling as claimed in Claim 6, wherein the coupling pin(s) is (are) spring-loaded and normally urged into engagement in said aperture(s), and wherein a handle is provided to move said pins against the spring-loading to release the coupling.

8. A coupling as claimed in Claim 7, wherein means are provided for locking said handle in a position in which the coupling parts are locked together and in a position in which the coupling parts are releasable.

EP 0 400 988 A1

Fig.1.

Fig.4.

Fig.5.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-C-961714 (H. GRETZSCHEL AND E.- M. COHNERT) <br> * page 2, line 20 - page 2, line 51; figures 1-3 * | 1, 2 | B61D3/18 <br> B60D1/07 <br> B60F1/04 |
| A | EP-A-0241099 (B. V. ALPHA ENGINEERING INGENIEURS- EN PROJECTBUREAU) <br> * column 2, line 39 - column 3, line 58; figures 4-6 * | 1, 2 | |

**TECHNICAL FIELDS SEARCHED (Int. Cl.5)**

B61D
B60D
B60F
B61F
B62D

The present search report has been drawn up for all claims

| Place of search | Date of completion of the search | Examiner |
|---|---|---|
| THE HAGUE | 10 SEPTEMBER 1990 | CHLOSTA P. |